# EUROPEAN PATENT SPECIFICATION

(11) **EP 3 908 394 B1**
(45) Date of publication and mention of the grant of the patent: **21.06.2023**
(21) Application number: 20715939.3
(22) Date of filing: 10.01.2020
(51) Int. Cl.: B01D 53/86, B01D 53/88, B01J 8/04

(54) **METHOD AND APPARATUS FOR TREATMENT OF VOC GASES**
VERFAHREN UND VORRICHTUNG ZUR BEHANDLUNG VON GASEN MIT FLÜCHTIGEN ORGANISCHEN KOHLENWASSERSTOFFEN
PROCEDE ET APPAREIL POUR LE TRAITEMENT DE GAZ CONTENANT DES COV

(30) Priority: 11.01.2019 FI 20195017
(43) Date of publication of application: 17.11.2021
(73) Proprietor: VOCCI OY, 00240 Helsinki (FI)
(72) Inventor: LYLYKANGAS, Reijo, 00240 Helsinki (FI)
(74) Representative: LEITZINGER OY
(86) International application number: PCT/FI2020/050020
(87) International publication number: WO 2020/144409

(56) References cited:
- WO-A1-2015/018978
- US-A- 5 941 697
- US-A1- 2012 308 453
- US-B2- 8 609 052

## Description

The invention relates to a method for treating VOC gases.

The invention also relates to an apparatus for treating VOC gases, and to the use of the apparatuses.

In the EU, solvents emissions are regulated by legislation based on the so-called VOC Directive EY1999/13. The directive includes the BAT (Best Available Technology) principle, which obliges public officials to apply tighter standards than those stated in the directive, if reasonably-priced and reliable technology to achieve them is commercially available.

The directive lays down industry-sector- and emission-amount-specific standards, which vary in the range 50-150 mg C/nm³ for industrial solvent (VOC) emissions. Because emission-reduction technology has developed, new climate-warming data has led officials to set much tighter limits for all direct and indirect greenhouse gases.

Many VOC gases are greenhouse gases, whose GWP (Global Warming Potential) values are from a few times to as much as 3000-times more detrimental than carbon dioxide (CO₂). As an overall estimate, the IPCC, i.e. the International Panel on Climate Change, has stated that VOC gases are 11-times worse than CO₂. This is due to the lower atmosphere ozone produced by VOC emissions and NOx emissions together.

There are several ways available to reduce VOC emissions. Paints and varnishes that are water-soluble or contain less solvents can be used. The general direction in emissions is towards lower contents, which places new demands for emission-treatment apparatuses.

VOC gas emissions are characterized by their content in a gas being so low and going even lower that it is not nearly sufficient to produce the energy required for combustion, but instead combustion requires the extremely efficient recycling of heat or the concentration of the VOC gases.

The most generally used technique to dispose of VOC gases is thermal combustion and the next is catalytic oxidation. In both, a recuperative or regenerative heat exchanger can be used to preheat the gas coming to the combustion plant. With a recuperative heat exchanger the efficiency is at best 65 % and with a regenerative one as much as 95 %.

The prior art is represented by FI 10329, CN 203642204, and WO 2011067471.

The most important difference between thermal and catalytic combustion is the combustion temperature, which in thermal combustion is about 800 °C and in catalytic combustion about 300 °C. This means that thermal combustion needs nearly three times more energy than catalytic combustion to heat the gas flow to the reaction temperature.

The solvent content, which is sufficient in thermal regenerative combustion to produce the energy needed for combustion, is 2-3 g/nm³. In catalytic combustion it is correspondingly 0.5-1.0 g/nm³. This content is called the autothermal point (ATP).

A weakness in regenerative combustion plants is that the gas's flow direction must change between two accumulator/preheater units (bed). During the change in direction a relatively small amount of uncleaned gas then goes to the exhaust pipe, which reduces the combustion plant's efficiency. Using a so-called dual-bed thermal combustion plant, a cleaning efficiency of about 96 % is achieved, which is still too small to meet the aforementioned emission-amount-specific standards.

The present invention is intended to eliminate at least some of the drawbacks relating to the prior art and to create a new type of solution for the treatment and cleaning of gases containing VOCs.

The invention is based on the idea that gas containing VOCs is brought to catalytic treatment performed in at least two catalyser zones, in order to oxidate and burn VOCs.

Each catalyser zone is located in its own chamber and the gas's entry zone and correspondingly its exhaust zone are located in an intermediate space, which separates the catalyser zones from each other. Heat released in connection with the oxidation of VOCs is recovered using heat exchangers arranged in at least the second catalyser zone. The flow of gas from the inlet zone to the first catalyser zone is controlled using a directional control valve, so that emissions caused by the change in the gas's flow direction can be minimized.

In the apparatus according to the invention, the first and second catalyser chambers are connected to an intermediate space separating them, the first part of which is equipped with inlet pipe of the gas to be cleaned and the second part of which is equipped with the exhaust pipe of the cleaned gas, wherein the inlet pipe of the gas to be cleaned is connected by the directional control valve to feed the gas to be cleaned to the desired chamber.

The apparatus can be used for treating and/or cleaning gases containing VOCs, particularly for removing VOCs from them.

Use of the solution can particularly reduce the size of the apparatus and reduce the emissions caused by the change in direction of the gas feed.

More specifically, the method, the apparatus, and correspondingly the use, according to the invention are principally characterized by what is stated in the characterizing portions of the independent Claims.

Considerable advantages can be achieved with the aid of the invention.

Thus use of the invention can substantially reduce the apparatus's manufacturing and transportation costs.

The present VOC-gas treatment apparatus and treatment method are technically extremely advantageous. In the new apparatus, the chambers have been separated. Unlike in previous solutions, the gas enters and leaves the chamber through an intermediate space. The intermediate space is divided in the centre into a gas entry part and an exhaust part. The height of the intermediate space is most suitably delimited by a "ceiling", so that additional heat sources can be placed in it, by which heat can be brought to the gas during the operation of the apparatus.

In efficiency, a regenerative heat exchanger is the most efficient heat collector. Due to its smaller size, the change-of-direction loss in a catalytic combustion plant is essentially smaller, so that its efficiency is higher. By means of the present solution, the efficiency of such a combustion plant can be further improved and new emission limits (default 5 mg/nm³) achieved, which is not possible using existing apparatus. For example, compared to the solutions disclosed in publications FI 10329 and WO 2011067471, the use of the present invention will achieve significant improvements particularly in the case of those matters. Using the present invention, an emission limit of up to 5 mg/nm³ is achieved in many situations.

Using the invention, low emission limits are achieved even in situations in which the autothermal point is even as low as 0.5 g/nm³.

The risks caused by faulty combustion are substantially reduced, as the burner and catalyser are isolated in different spaces.

The flow of gas is controlled in such a way that its change of direction takes place, for example, at most in 0.1 second, which significantly reduces the emissions caused by the change in direction. As the directional control valve, a valve is most suitably used, which has a short stroke and most suitably a high operating pressure (6-8 bar). This permits a substantial increase in velocity and the use of a double-acting cylinder. The operating device can also be an electric stepper motor.

In thermal and catalytic combustion plants, the gas flow in both the heat exchanger and the catalyser is laminar. At the flow velocities used in reactors, the Nusselt and Sherwood numbers in the RTO's straight ducts are about 3. They increase slowly almost linearly as the velocity increases. At corresponding flow velocities in mixing X-flow ducts the numbers are correspondingly 9-12. I.e. the relative efficiency of heat and mass transfer increases 3...4 times.

Combustion plants are typically made tailored to each application and they are installed and started up by the supplier's personnel. The present new apparatuses can be manufactured in standard product series of several, for example seven, products, which can be easily installed and started up with the aid of instructions, like many other devices. This therefore makes a clear difference from existing apparatuses, the installation of which must always take place on site, due to their large size.

In one embodiment, the apparatus is by nature a *plug and play* product. Its start-up and control are then taken care of advantageously by means of the internet. The apparatuses can be linked to a network, through which the continuous monitoring and reporting of operation can be taken care of.

In summary, the following can be given as the invention's advantages:
- containers are not required for the plant, but only for transportation; this reduces the space needed by the apparatus significantly, for example, by 50-69 %, and
- reduces the weight by about 30-45 % and reduces the manufacturing costs by, for example, about 30 %,
- separating the catalysers and heat exchangers from each other keeps the burner used in starting up the plant and in producing support energy separate from the catalysers, thus preventing possible fire damage.

Change of the flow direction is controlled by an exhaust-side sensor, wherein the heat arising in the reactions times the direction-change moment correctly according to the energy production at the time. In this way, the optimal moment of change is achieved, in terms of emissions and energy consumption. The time of the change in direction varies in the range 30 s - 240 s, depending on the amount and specific heat of the VOCs.

In a preferred embodiment of the invention, the size of the apparatus can be further reduced by shortening the stroke of the directional control valve. In conventional plants, the length of the valve's stroke is typically the same as the diameter of the valve's opening; the cross-sectional surface area of the outer circumference is unnecessarily large. In the present solution, the cross-sectional area is most suitably the same as the cross-sectional surface area of the valve opening. The length of stroke is then about one-third of the valve's diameter. This permits a substantial increase in speed and the use of a double-acting cylinder.

The present apparatus has a short delivery time, because there are typically drawing ready of all the apparatuses and many standard parts are used in them.

In the following, embodiments of the invention will be examined in greater detail with the aid of the accompanying drawing, in which the apparatus is shown as a top view of the schematic structure of one embodiment.

In the present context, the terms "gases containing VOCs" or "VOC gases" refer generally to gases that contain volatile organic compounds (VOC) with a low boiling point. Their boiling point is typically less than 250 °C and their vapour pressure at a temperature of 20 °C is 0.01 k Pa or greater. Some of the compounds are gases even at room temperature. VOCs include aliphatic and aromatic hydrocarbons, chlorinated hydrocarbons, and alcohols, glycols, ether, and esters, as well as organic acids, ketones, and aldehydes. Particular examples are hexane, butane, benzene, xylene, styrene, methylene chloride, dichloroethane, trichloromethane, trichloroethane, and ethyl acetate. In addition to this, flammable inorganic compounds, such as carbon monoxide (CO), which should also be oxidated, may travel along with a gas.

Typical examples of gases containing VOCs are gases containing solvents (solvent vapours) from industrial processes. VOC gases can particularly come from industrial processes manufacturing and using surfacing agents, cleaning agents, adhesives, and printing inks.

In the context of the above, the gases to be treated typically contain at least 25 mg, particularly at least 50 mg C/nm³, of VOCs, but the method and apparatus are also suitable for treating gases containing smaller contents.

In one preferred embodiment, the treatment apparatus comprises at least one gas inlet portion, at least two regenerative heat exchangers, and at least one gas exhaust portion. At least one gas division portion is connected to the treatment apparatus and at least one gas division valve for changing the flow direction of the gas being fed, between the regenerative heat exchangers. An exhaust valve is connected to the gas exhaust portion to guide the gas flow to the exhaust portion.

In one preferred embodiment, a mixing regenerative heat exchanger made from metal plates is used as the heat exchanger. The efficiency of this is very high (over 90 %). The VOC contents are generally so low that they do not produce enough energy. A heat exchanger with an efficiency of more than 90 % and a catalyser operating at a low temperature are needed, so that the consumption of support energy will not become great, or that the plant can operate autothermally without support energy.

At the same time, the new structure simplifies the construction of heat-exchanger elements and accelerates their manufacture. All in all, the devices' manufacturing costs are reduced by more than 30 %.

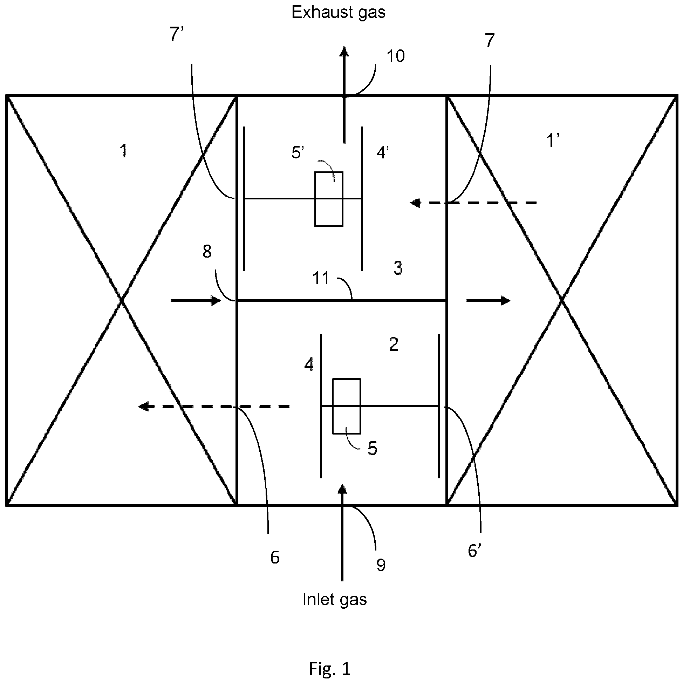

Figure 1 shows a layout schematic diagram of the bottom of one embodiment of the apparatus solution.

The apparatus according to the embodiment according to the drawing for cleaning gases containing VOCs comprises at least two chambers, 1 and 1', which both contain a (not shown) catalyser and a heat exchanger. The heat exchangers of the catalyser chambers are typically regenerative. The heat recovery is described in greater detail below.

The chambers contain an inlet connection 6, 6' for the gas to be treated and an exhaust connection 7, 7' for the treated gas.

The chambers 1 and 1' are connected together in one chamber (e.g. in chamber 1) to lead the oxidated gas to the second chamber (1'). In the drawing, the gas flow is shown by an arrow going from left to right. The exhaust opening is marked with the reference number 8.

In the chambers 1 and 1' the heat exchangers and catalysers are arranged in a cascade, so that the flow of VOC gas to be treated runs first through the heat exchanger and then through the catalyser.

The first chamber 1 and the second chamber 1' are joined in an intermediate space 2, 3 separating them. The intermediate space's first part, i.e. the inlet zone 2, with an inlet pipe 9 for the gas to be treated and the second part 3 with an exhaust pipe 10 for the treated gas.

In the intermediate space 2, 3 is a wall, especially a ceiling wall, which is equipped with a heat source, which can be used to produce heat. The heat is typically needed to start the combustion process. Heat is usually also needed for operation below the autothermal point.

In one embodiment, an additional heat source is located in the intermediate space, which comprises electrical resistances or a gas burner or a combination of these.

The inlet pipe 9 for the gas to be cleaned (inlet gas) is connected to the inlet connection 6 for the gas to be cleaned to feed the gas to the desired chamber. The chambers' inlet connections 6 and 6' can opened and closed by a directional control valve 4, i.e. a gas-division valve.

Similarly, the cleaned gas exhaust pipe 10 is connected to the cleaned-gas exhaust connection 7, wherein the chambers' exhaust connections 7 and 7' can be opened and closed by a directional control valve 5, i.e. a gas-distribution valve.

As can be seen from the figure, the catalyser chambers 1, 1' are units separated from each other, which can be made separately and which can be joined together through the intermediate space. The intermediate space 2, 3 can also be made as its own unit. The inlet zone 2 and exhaust zone 3 are part of the same casing-like apparatus part, whereby they are separated from each other by a partition wall 11.

The apparatus can thus be assemble from three separate apparatus parts. The reactor's body, in which all of the aforementioned functions are located, can be made from two welded parts.

The compact reactor's structure permits freer planning of the layout. The VOC combustion apparatuses can be loaded into transportation containers open at one end and thus gain a freightage advantage. Sea carriage costs are reduced by up to 70 %, if the new products can be transported as container freight, particularly as standard containers (e.g., as 20' containers).

As stated above, the flow of gas from the gas's inlet pipe 9 through the inlet zone 2 to the first catalyser chamber 1 and correspondingly from the second catalyser chamber 1' to the exhaust zone 3 and the exhaust pipe 10 is controlled using a valve, particularly a directional control valve, by which the direction of flow can be changed.

In one embodiment, a directional control valve is used, the change of direction of which takes place in less than 0.5 second, particularly less than 0.25 second, most suitably less than 0.15 second, preferably less than 0.1 second, or even less than 0.075 second.

In one embodiment, a short-stroke valve is used. In a particularly preferred embodiment a valve is used, the cross-sectional surface area of the outer circumference of which is one fourth of the diameter of the valve, i.e. the surface area of the valve opening is Π × D²/4 and the surface area of the valve's outer circumference gap is Π × D/4 × D. Especially such a solution permits a substantial increase in speed and the use of a double-acting cylinder.

In one embodiment, the operation of the directional control valve is controlled, for example, using an operating element 5, 5' installed in the intermediate chamber 2, 3, for example by two operating elements installed in the intermediate chamber.

In one embodiment, a directional control valve, the operating element of which is a pneumatic cylinder, is used as the gas-dividing valve.

In one embodiment, a directional control valve is used, which is operated by a double-acting cylinder, such as a double-acting pneumatic cylinder.

In another embodiment, a directional control valve, the operating element of which is a stepper motor, particularly an electromechanical steeper motor, is the gas dividing valve.

The direction control valves are preferably operated electromechanically by stepper motors. This is quick and particularly advantageous if the temperature in the intermediate space rises above 150 °C.

In both of the aforesaid embodiments, the change in direction of the valves takes place even in less than 0.1 second, while it is slower using traditional long-stroke cylinders.

In one embodiment directional control valves are used, the operating element of which is arranged inside the inlet zone and correspondingly the exhaust zone.

The gas to be cleaned containing VOCs is led most suitably with the aid of a gas distribution valve alternately to the apparatus's chambers. Correspondingly, gas is removed alternately from the apparatus's chambers. In practice, the cleaned gas is removed from a different (i.e. opposite) chamber from that to which the gas to be cleaned is fed.

Thus, in one embodiment, the gas containing VOCs is led, for a first period of time, to the first catalyser chamber, and for a second period of time to the second catalyser chamber, wherein the change in direction of the gas flow from the first catalyser chamber to the second is performed using a directional control valve and the change in direction takes place in less than 0.1 second.

Correspondingly, the cleaned gas is removed, during the first period of time, from the second catalyser chamber and during the second period of time from the first catalyser chamber, wherein the change in direction of the gas flow from the first catalyser chamber to the second is performed using a directional control valve and the change in direction takes place in less than 0.1 second.

The "first" catalyser chamber defined in the present method, as a result of the change in direction of the gas feed, in which most of the oxidation occurs, is either of chambers described above, and the "second" catalyser chamber, in which heat is recovered, is correspondingly the second of these chambers.

The valves' rapid change in direction is extremely important, as in a regenerative combustion plant nearly all emissions arise during changes in direction. In known solutions it is difficult to achieve 20 mg/nm³, particularly with higher emissions. Using the present technology a 5 mg/nm³ limit can be achieved with no after-treatment of the exhaust gas.

"Change in direction" means that the gas flow is changed to take place to a different zone, i.e. a different chamber. The flow of gas to one zone (chamber) stops and the flow to a second zone (chamber) starts. The flow of gas is most suitably regulated using a directional control valve.

The time in the change in direction is especially the time that passes to the closing of the valve, i.e. the time that passes from when the valve is fully (100 %) open to when it is fully (100 %) closed. At the same time access to the second chamber opens, whereby the same time goes to opening, but particularly when using separate cylinders opening takes place generally slightly faster than closing, which is due to the pressure of the flowing gas.

Heat is released in the oxidation, i.e. combustion of gas containing VOCs. This is most suitably recovered. In one embodiment, the apparatus is equipped with heat exchangers. In one embodiment, the heat exchangers are arranged in connection with at least the second, most suitably both catalyser zones.

In one embodiment, most of the heat available from the combustion of gas containing VOCs is recovered in the second catalyser zone (1 or 1' according to the flow direction) by a heat exchanger. "Most" means then more than 50 %, particularly more than 60 %, most suitably 70-100 %, e.g. about 75-100 % of the amount of heat released in connection with the oxidation of the VOCs.

The apparatus according to the aforesaid embodiment is used as follows:
The gas containing VOCs is typically led to the apparatus's inlet zone using a fan (not shown) in front of which a particle filter is arranged. Guided by a valve 4, the gas travels through a (not shown) heat store to the first catalyser 1, in which most of the VOC emissions oxidize. The gas then travels through a second catalyser 2 in which the rest of the VOC emissions oxidize. Catalytic combustion is performed at about 300 °C. The gas then travels through a (not shown) heat accumulator and releases most of its heat to it. The gas then travels through the exhaust valve 4' and a rear chamber 3 to the exhaust pipe.

Commercial oxidation catalysers, noble-metal catalysers, for example Pt or Pd on carbon, are suitable as catalytic-combustion catalysers. It is also possible to use various honeycomb solutions and other multilayer catalyser structures.

On one embodiment, Pt/Pd catalysers are used, especially metal-honeycomb Pt/Pd catalysers, in which there is a mixing cross-flow honeycomb structure. These work with most hydrocarbons at a temperature of about 300 °C. The noble-metal charge is, for example, 30 g/ft³.

A particular advantage of noble-metal catalysers is the fact that, with their aid, combustible inorganic compounds, such as carbon monoxide, contained in the gases being treated, oxidize. This can take place already at about 150 °C, which promotes the oxidation of the actual VOC emissions.

Using the aforementioned solution, VOC emissions are reduced by typically more than 99.5 %. In one embodiment, the apparatus can be used to clean VOC gases in such a way that the VOC content of the exhaust gas is less than about 10 mg/nm³. Preferably using the present solution a 5 mg/nm³ emissions limit is achieved, i.e. the VOC content is at most 5 mg/nm³, mainly lower than that.

The apparatus is suitable for treating gases containing industrial solvent emissions.

In one embodiment, gases are treated, in which the content of VOC compounds is at least 25 mg, e.g. at least 50 mg C/nm³. The competitiveness of the present apparatus is at its best at low contents, when support energy is needed. In the apparatus there is a low autothermal point ATP, particularly 1.0 g/nm³ or less.

The apparatus construction significantly reduces the apparatus's total volume. This is also influenced by the use of chamber's internal electrical or pneumatic operating devices (such as cylinders), by which the use of the 4-6 long-stroke pneumatic cylinders of traditional combustion plants can be avoided. All the changes made relative to the prior art reduce the apparatus size by more than 50 %.

Containers are needed only for transport. In this way, the volume is more than halved and the weight and costs are reduced by about 30 %.

The following are examples of the sizes of standard devices fitting container freight (20'):

| Capacity nm³/h | | Previous m³ | New m³ |
|---|---|---|---|
| | - 1300 | 5.7 | 1.8 |
| | - 5000 | 12.7 | 6.3 |
| | - 10 000 | 37.5 | 12.0 |
| | - 15 000 | 37.5 | 17.5 |
| | - 22 000 | not made | 21.8 |
| | - 30 000 | 92.5 | 28.6 |

These standard plants cover about 80 % of enquiries. Larger plants are either assembled from standard products or tailor-made. Standard plants have a short delivery time, because there are already drawings of them and the plants comprise many standard parts.

The present apparatus is used, for example, to treat and/or clean gases containing VOCs.

In one embodiment, the present solution can be used to achieve a cleaning level, i.e. conversion level of more than 99.5 %.

The plants' autothermal point is 0.5-1.0 g/nm³, depending on the hydrocarbon.

In one embodiment, the catalysers and heat exchangers are separated from each other. This keeps the burner used in the start-up of the plants and the production of support energy separate from the catalysers, which prevents possible fire damage to the catalysers.

It has been surprisingly observed with a calculation program that, by altering the flow-opening density of the heat-store cells and the thickness of the cell wall, much greater improvements to the cell than previously assumed can be obtained. This is not shown in multi-variable manual calculations.

In one embodiment, the cell is assembled from corrugated 150-mm wide steel bands. The corrugations are not made perpendicularly to the longitudinal direction of the band, but at an angle of about 75 degrees. The cells are stacked against each other in such a way that the flow directions intersect each other. This forms a mixing structure.

In calculations now made, it was surprisingly observed that the plate thickness and the opening density had a much greater effect than assumed on the autothermal point and the possibility to increase the content of the VOC gas. This significantly expands the operating range of the combustion plant and reduces operating costs at low contents. In the calculations performed, it was observed that the lowest autothermal point was achieved with a folio thickness of 0.3 mm and a number of openings of 20 openings/cm². The lowest value of 0.35 g/nm³ is half of previous ones.

The greatest permitted VOC concentration is now about 7 g/nm³. By calculation it was observed that it can be doubled by thickening the folio to 1.5 mm and reducing the opening density to 2 openings/cm². At the same time, the direction-change interval increases many times, which significantly reduces the direction-change-time emissions.

It was observed surprisingly that in both cases the pressure losses and manufacturing costs remain at the previous level.

It should be further stated that, although a structure consisting of two chambers is described above, it is of course possible to implement the structure described with more chambers (e.g. 3-6 chambers). Such several chambers can be arranged in a cascade or in parallel.

In one embodiment, the opening density of the apparatus's heat exchanger is 20-20 openings/cm² and the wall thickness is 0.3-1.5 mm.

In one embodiment, all the units belonging to the apparatus can be advantageously transported in a 20' standard container.

### List of reference numbers

- 1, 1': catalyser chambers
- 2: gas inlet chamber
- 3: gas exhaust chamber
- 4, 4': directional control valve
- 5, 5': directional control valve's operating element
- 6, 6': chamber's inlet connection
- 7, 7': chamber's exhaust connection
- 8: chamber's exhaust opening
- 9: gas inlet pipe
- 10: gas exhaust pipe
- 11: partition

### Reference publications

FI 10329
CN 203642204
WO 2011067471

## Claims

1. Method for cleaning gases containing VOCs, **characterized in that**
- the gas containing VOCs is led through an inlet pipe to an inlet zone, from which the gas is transferred to a first catalyser zone, in which most of the VOCs are oxidated, and the gas thus obtained is led to a second catalyser zone, where the rest of the VOCs are oxidated,
- after which the gas is led to an exhaust zone, from which the gas is removed with the aid of an exhaust pipe,
wherein
- each catalyser zone is located in its own chamber and the inlet zone and correspondingly the exhaust zone are located in an intermediate space, which separates the catalyser zones from each other,
- the heat released in connection with the oxidated of the VOCs is recovered using heat exchangers arranged in at least the second catalyser zone, and
- the flow of the gas from the inlet zone to the first catalyser zone is controlled using a direction control valve.

2. Method according to Claim 1, **characterized in that** the flow of the gas from the second catalyser zone to the exhaust zone is controlled using a direction control valve.

3. Method according to Claim 1 or 2, **characterized in that** a direction control valve is used, the change in direction of which takes place in less than 0.25 seconds, particularly less than 0.1 seconds.

4. Method according to any of the above Claims, **characterized in that** a direction control valve is used, the operating element of which is arranged inside the inlet and correspondingly the exhaust zone.

5. Method according to any of the above Claims, **characterized in that** the gas containing VOCs is led for a first period of time to the first catalyser zone and for a second period of time to the second catalyser zone, wherein the change in the direction of the gas flow for the first catalyser zone to the second is performed using a directional control valve and wherein the change in direction takes place in less than 0.1 seconds.

6. Method according to any of the above Claims, **characterized in that** the cleaned gas is removed for a first period of time from the second catalyser zone and for a second period of time from the first catalyser zone, wherein the change in direction of the gas flow from the first catalyser zone to the second is performed using a directional control valve and wherein the change in direction takes place in less than 0.1 seconds.

7. Method according to any of the above Claims, **characterized in that** in the intermediate space there is a partition, particularly a ceiling partition, which is equipped with a heat source, by which heat can be produced, which is needed, for example, to start the combustion process, or for operation beneath the autothermal point.

8. Method according to any of the above Claims, **characterized in that** the heat released in the oxidation of the gas containing VOCs is mainly recovered using the heat exchanger of the second catalyser zone.

9. Apparatus for cleaning gases containing VOCs, which apparatus comprises
- at least two chambers (1, 1'), which contain a catalyser, which is arranged to oxidate VOCs from the gas fed to the chamber, which chambers include an inlet connection (6, 6') for the gas to the treated and an exhaust connection (7, 7') for the treated gas,
- wherein the chambers (1, 1') are joined together to lead the gas oxidated in one chamber to the other chamber, wherein
- there are heat exchangers in the chambers to recover the heat released in the oxidation of the VOCs,
**characterized in that**
- the first and second chambers (1, 1') are connected to an intermediate space (2, 3) separating them, a first part (2) of which is equipped with an inlet pipe (9) for gas to be cleaned and a second part (3) of which is equipped with an exhaust pipe (10) for the cleaned gas, wherein
- the inlet pipe for the gas to be cleaned is connected by a directional control valve (4) to feed the gas to be cleaned to the desired chamber.

10. Apparatus according to Claim 9, **characterized in that** the exhaust pipe for the cleaned gas is connected by a directional control valve (4') to the exhaust connection for the cleaned gas.

11. Apparatus according to Claim 9 or 10, **characterized in that** the operating element of the directional control valve (4, 4') is a pneumatic cylinder, such as a double-operating pneumatic cylinder, or a stepper motor, particularly an electromechanical stepper motor, wherein the said operating element is most suitably fitted inside the apparatus.

12. Apparatus according to any of Claims 9-11, **characterized in that** the heat exchangers of the catalyser chambers (1, 1') are regenerative.

13. Apparatus according to any of Claims 9-12, **characterized in that** in the intermediate space (2, 3) there is a partition, particularly a ceiling partition, which is equipped with a heat source, by which heat can be produced, which is needed, for example, to start the combustion process or for operating beneath the autothermal point.

14. Apparatus according to any of Claims 9-13, **characterized in that** the opening density of the apparatus's heat exchanger is 2-20 openings/cm² and its wall thickness is 0.3-1.5 mm.

15. Use of apparatus according to any of Claims 9-14 for treating and/or cleaning gases containing VOCs.

## Patentansprüche

1. Verfahren zum Reinigen von Gasen, die flüchtige organische Verbindungen (VOCs) enthalten, **dadurch gekennzeichnet, dass**
- das VOCs enthaltende Gas durch ein Einlassrohr zu einer Einlasszone geleitet wird, von der das Gas zu einer ersten Katalysatorzone überführt wird, in welcher der Großteil der VOCs oxidiert wird, und das auf diese Weise erhaltene Gas zu einer zweiten Katalysatorzone geleitet wird, wo der Rest der VOCs oxidiert wird,
- woraufhin das Gas zu einer Auslasszone geleitet wird, von der das Gas mithilfe eines Auslassrohres abgeführt wird,
wobei
- jede Katalysatorzone in ihrer eigenen Kammer angeordnet ist und die Einlasszone und dementsprechend die Auslasszone in einem Zwischenbereich angeordnet sind, der die Katalysatorzonen voneinander trennt,
- die in Zusammenhang mit den oxidierten der VOCs freigesetzte Wärme mittels Wärmetauschern, die in mindestens der zweiten Katalysatorzone angeordnet sind, rückgewonnen wird und
- der Strom des Gases von der Einlasszone zu der ersten Katalysatorzone mittels eines Wegeventils gesteuert wird.

2. Verfahren nach Anspruch 1, **dadurch gekennzeichnet, dass** der Strom des Gases von der zweiten Katalysatorzone zu der Auslasszone mittels eines Wegeventils gesteuert wird.

3. Verfahren nach Anspruch 1 oder 2, **dadurch gekennzeichnet, dass** ein Wegeventil verwendet wird, dessen Richtungsänderung in weniger als 0,25 Sekunden, insbesondere in weniger als 0,1 Sekunden, erfolgt.

4. Verfahren nach einem beliebigen der vorhergehenden Ansprüche, **dadurch gekennzeichnet, dass** ein Wegeventil verwendet wird, dessen Arbeitselement innerhalb der Einlasszone und dementsprechend der Auslasszone angeordnet ist.

5. Verfahren nach einem beliebigen der vorhergehenden Ansprüche, **dadurch gekennzeichnet, dass** das VOCs enthaltende Gas während eines ersten Zeitraums zu der ersten Katalysatorzone geleitet wird und während eines zweiten Zeitraums zu der zweiten Katalysatorzone geleitet wird, wobei die Änderung der Richtung des Gasstroms zu der ersten Katalysatorzone auf die zweite mittels eines Wegeventils durchgeführt wird und wobei die Richtungsänderung in weniger als 0,1 Sekunden erfolgt.

6. Verfahren nach einem beliebigen der vorhergehenden Ansprüche, **dadurch gekennzeichnet, dass** das gereinigte Gas während eines ersten Zeitraums von der zweiten Katalysatorzone und während eines zweiten Zeitraums von der ersten Katalysatorzone abgeführt wird, wobei die Richtungsänderung des Gasstroms von der ersten Katalysatorzone auf die zweite mittels eines Wegeventils durchgeführt wird und wobei die Richtungsänderung in weniger als 0,1 Sekunden erfolgt.

7. Verfahren nach einem beliebigen der vorhergehenden Ansprüche, **dadurch gekennzeichnet, dass** in dem Zwischenbereich eine Trennwand, insbesondere eine Deckentrennwand, vorhanden ist, die mit einer Wärmequelle ausgestattet ist, mittels welcher Wärme erzeugt werden kann, die beispielsweise zum Starten des Verbrennungsvorgangs oder für einen Betrieb unterhalb des autothermen Punktes benötigt wird.

8. Verfahren nach einem beliebigen der vorhergehenden Ansprüche, **dadurch gekennzeichnet, dass** die Wärme, die bei der Oxidation des VOCs enthaltenden Gases freigesetzt wird, hauptsächlich mittels des Wärmetauschers der zweiten Katalysatorzone rückgewonnen wird.

9. Vorrichtung zum Reinigen von Gasen, die VOCs enthalten, wobei die Vorrichtung aufweist:
- mindestens zwei Kammern (1, 1'), die einen Katalysator enthalten, der angeordnet ist, um VOCs aus dem der Kammer zugeführten Gas zu oxidieren, wobei die Kammern einen Einlassanschluss (6, 6') für das zu behandelnde Gas und einen Auslassanschluss (7, 7') für das behandelte Gas aufweisen,
- wobei die Kammern (1, 1') miteinander verbunden sind, um das in einer Kammer oxidierte Gas zu der anderen Kammer zu leiten, wobei
- in den Kammern Wärmetauscher vorhanden sind, um die bei der Oxidation der VOCs freigesetzte Wärme rückzugewinnen,
**dadurch gekennzeichnet, dass**
- die erste und die zweite Kammer (1, 1') mit einem diese trennenden Zwischenbereich (2, 3) verbunden sind, dessen erster Teil (2) mit einem Einlassrohr (9) für zu reinigendes Gas ausgestattet ist und dessen zweiter Teil (3) mit einem Auslassrohr (10) für das gereinigte Gas ausgestattet ist, wobei
- das Einlassrohr für das zu reinigende Gas durch ein Wegeventil (4) verbunden ist, um das zu reinigende Gas der gewünschten Kammer zuzuführen.

10. Vorrichtung nach Anspruch 9, **dadurch gekennzeichnet, dass** das Auslassrohr für das gereinigte Gas durch ein Wegeventil (4') mit dem Auslassanschluss für das gereinigte Gas verbunden ist.

11. Vorrichtung nach Anspruch 9 oder 10, **dadurch gekennzeichnet, dass** das Arbeitselement des Wegeventils (4, 4') ein Pneumatikzylinder, beispielsweise ein doppeltwirkender Pneumatikzylinder, oder ein Schrittmotor, insbesondere ein elektromechanischer Schrittmotor, ist, wobei das Arbeitselement am geeignetsten innerhalb der Vorrichtung angebracht ist.

12. Vorrichtung nach einem beliebigen der Ansprüche 9-11, **dadurch gekennzeichnet, dass** die Wärmetauscher der Katalysatorkammern (1, 1') regenerativ sind.

13. Vorrichtung nach einem beliebigen der Ansprüche 9-12, **dadurch gekennzeichnet, dass** in dem Zwischenbereich (2, 3) eine Trennwand, insbesondere eine Deckentrennwand, vorhanden ist, die mit einer Wärmequelle ausgestattet ist, mittels welcher Wärme erzeugt werden kann, die beispielsweise zum Starten des Verbrennungsvorgangs oder für einen Betrieb unterhalb des autothermen Punktes benötigt wird.

14. Vorrichtung nach einem beliebigen der Ansprüche 9-13, **dadurch gekennzeichnet, dass** die Öffnungsdichte des Wärmetauschers der Vorrichtung 2-20 Öffnungen/cm² und seine Wandstärke 0,3-1,5 mm beträgt.

15. Verwendung der Vorrichtung nach einem beliebigen der Ansprüche 9-14 zum Behandeln und/oder Reinigen von VOCs enthaltenden Gasen.

## Revendications

1. Procédé de purification de gaz contenant des COV, **caractérisé en ce que**
- le gaz contenant des COV est guidé à travers un tuyau d'entrée vers une zone d'entrée, à partir de laquelle le gaz est transféré vers une première zone de catalyseur, dans laquelle la majorité des COV est oxydée, et le gaz ainsi obtenu est guidé vers une deuxième zone de catalyseur, où le reste des COV est oxydé,
- après quoi le gaz est guidé vers une zone d'échappement, à partir de laquelle le gaz est retiré à l'aide d'un tuyau d'échappement,
dans lequel
- chaque zone de catalyseur se trouve dans sa propre chambre et la zone d'entrée et de manière correspondante la zone d'échappement se trouvent dans un espace intermédiaire, lequel sépare les zones de catalyseur l'une de l'autre,
- la chaleur libérée en association avec les COV oxydés est récupérée à l'aide d'échangeurs de chaleur disposés au moins dans la deuxième zone de catalyseur, et
- le flux de gaz s'écoulant de la zone d'entrée vers la première zone de catalyseur est commandé à l'aide d'une soupape de commande de direction.

2. Procédé selon la revendication 1, **caractérisé en ce que** le flux de gaz s'écoulant de la deuxième zone de catalyseur vers la zone d'échappement est commandé à l'aide d'une soupape de commande de direction.

3. Procédé selon la revendication 1 ou 2, **caractérisé en ce qu'**une soupape de commande de direction est utilisée, dont le changement de direction a lieu en moins de 0,25 seconde, en particulier en moins de 0,1 seconde.

4. Procédé selon l'une quelconque des revendications précédentes, **caractérisé en ce qu'**une soupape de commande de direction est utilisée, dont l'élément d'actionnement est disposé dans l'entrée et de manière correspondante dans la zone d'échappement.

5. Procédé selon l'une quelconque des revendications précédentes, **caractérisé en ce que** le gaz contenant des COV est guidé pour une première période de temps vers la première zone de catalyseur et pour une deuxième période de temps vers la deuxième zone de catalyseur, dans lequel le changement de direction du flux de gaz de la première zone de catalyseur vers la deuxième est réalisé à l'aide d'une soupape de commande de direction et dans lequel le changement de direction a lieu en moins de 0,1 seconde.

6. Procédé selon l'une quelconque des revendications précédentes, **caractérisé en ce que** le gaz purifié est retiré pour une première période de temps de la deuxième zone de catalyseur et pour une deuxième période de temps de la première zone de catalyseur, dans lequel le changement de direction du flux de gaz de la première zone de catalyseur vers la deuxième est réalisé à l'aide d'une soupape de commande de direction et dans lequel le changement de direction a lieu en moins de 0,1 seconde.

7. Procédé selon l'une quelconque des revendications précédentes, **caractérisé en ce que** l'espace intermédiaire est une cloison, en particulier une cloison de plafond, laquelle est équipée d'une source de chaleur, permettant de produire de la chaleur, laquelle est nécessaire par exemple pour démarrer le processus de combustion, ou pour un fonctionnement en dessous du point autothermique.

8. Procédé selon l'une quelconque des revendications précédentes, **caractérisé en ce que** la chaleur libérée dans l'oxydation du gaz contenant des COV est récupéré principalement à l'aide de l'échangeur de chaleur de la deuxième zone de catalyseur.

9. Appareil de purification de gaz contenant des COV, ledit appareil comprenant :
- au moins deux chambres (1, 1') contenant un catalyseur, lequel est conçu pour oxyder des COV à partir du gaz alimenté vers la chambre, lesdites chambres incluant un raccord d'entrée (6, 6') pour le gaz à traiter et un raccord d'échappement (7, 7') pour le gaz traité,
- dans lequel les chambres (1, 1') sont reliées entre elles pour guider le gaz oxydé dans une chambre vers l'autre chambre, dans lequel
- il est prévu des échangeurs de chaleur dans les chambres pour la récupération de la chaleur libérée pendant l'oxydation des COV,
**caractérisé en ce que**
- les première et deuxième chambres (1, 1') sont reliées à un espace intermédiaire (2, 3) séparant celles-ci, comprenant une première partie (2) équipée d'un tuyau d'entrée (9) pour le gaz à purifier et une deuxième partie (3) équipée d'un tuyau d'échappement (10) pour le gaz purifié, dans lequel
- le tuyau d'entrée pour le gaz à purifier est raccordé par le biais d'une soupape de commande de direction pour alimenter le gaz à purifier vers la chambre souhaitée.

10. Appareil selon la revendication 9, **caractérisé en ce que** le tuyau d'échappement pour le gaz purifié est raccordé au raccord d'échappement pour le gaz purifié par le biais d'une soupape de commande de direction (4').

11. Appareil selon la revendication 9 ou 10, **caractérisé en ce que** l'élément d'actionnement de la soupape de commande de direction (4, 4') est un cylindre pneumatique, tel qu'un cylindre pneumatique à double actionnement, ou un moteur pas-à-pas, en particulier un moteur pas-à-pas électromécanique, dans lequel ledit élément d'actionnement est avantageusement monté à l'intérieur de l'appareil.

12. Appareil selon l'une quelconque des revendications 9 à 11, **caractérisé en ce que** les échangeurs de chaleur des chambres de catalyseur (1, 1') sont régénératifs.

13. Appareil selon l'une quelconque des revendications 9 à 12, **caractérisé en ce que** l'espace intermédiaire (2, 3) est une cloison, en particulier une cloison de plafond, laquelle est équipée d'une source de chaleur, permettant de produire de la chaleur, laquelle est nécessaire par exemple pour démarrer le processus de combustion ou pour un fonctionnement en dessous du point autothermique.

14. Appareil selon l'une quelconque des revendications 9 à 13, **caractérisé en ce que** la densité d'ouverture de l'échangeur de chaleur de l'appareil s'élève à 2-20 ouvertures / cm² et son épaisseur de paroi mesure entre 0,3 et 1,5 mm.

15. Utilisation d'un appareil selon l'une quelconque des revendications 9 à 14, pour le traitement et/ou la purification de gaz contenant des COV.
